(19) Europäisches Patentamt

European Patent Office

Office européen des brevets

(11) Veröffentlichungsnummer: **0 466 021 A2**

# (12) EUROPÄISCHE PATENTANMELDUNG

(21) Anmeldenummer: **91111084.9**

(51) Int. Cl.5: **H01H 35/14**

(22) Anmeldetag: **04.07.91**

(30) Priorität: **13.07.90 DE 4022388**

(43) Veröffentlichungstag der Anmeldung:
**15.01.92 Patentblatt 92/03**

(84) Benannte Vertragsstaaten:
**DE ES FR GB IT SE**

(71) Anmelder: **ddm hopt + schuler GmbH & Co. KG.**
**Heerstrasse 44**
**W-7210 Rottweil(DE)**

(72) Erfinder: **d'Elsa, Uwe**
**Schubertstrasse 8/1**
**W-7213 Dunningen(DE)**

(74) Vertreter: **KOHLER SCHMID + PARTNER**
**Patentanwälte**
**Ruppmannstrasse 27**
**W-7000 Stuttgart 80(DE)**

(54) **Beschleunigungsschalter mit Schnappfeder.**

(57) Bei einem Beschleunigungsschalter zum Schlie-ßen mindestens eines elektrischen Kontaktpaares (6', 6'') durch eine auf eine Feder einwirkende Trägheitsmasse (1), wobei die Feder und die Trägheitsmasse (1) so gewählt sind, daß der Beschleunigungsschalter erst anspricht, wenn eine auf die Trägheitsmasse (1) einwirkende Beschleunigungskraft einen vorgege-benen Wert überschreitet, ist die Feder ein monosta-biles Schnappelement (4). An der dem Schnappele-ment (4) zugewandten Seite der Trägheitsmasse (1) kann ein elastisches Pufferelement (10), das ein ela-stomeres Material und/oder eine Verzögerungsfeder (12) enthalten kann, vorgesehen sein. Der Beschleu-nigungsschalter kann bei entsprechender Anordnung der Schnappelemente (4) und ihrer zugehörigen Kontaktpaare (6', 6'') auf Beschleunigungen in jeder beliebigen Raumrichtung ansprechen.

Fig.1

EP 0 466 021 A2

Die Erfindung bezieht sich auf einen Beschleunigungsschalter zum Schließen mindestens eines elektrischen Kontaktpaares durch eine auf eine Feder einwirkende Trägheitsmasse, wobei die Feder und die Trägheitsmasse so gewählt sind, daß der Beschleunigungsschalter erst anspricht, wenn eine auf die Trägheitsmasse einwirkende Beschleunigungskraft einen vorgegebenen Wert überschreitet.

Ein solcher Beschleunigungsschalter ist beispielsweise durch die DE-PS 26 06 790 bekanntgeworden. Bei der bekannten Anordnung wird die Trägheitsmasse durch zwei sich kreuzende Federstäbe in ihrer Ruhelage gehalten. Übersteigt die Beschleunigung einen vorgegebenen Wert, so drückt der als Trägheitsmasse dienende Körper die Federstäbe entgegen ihrer Federkraft zurück, bis der Körper zwei Kontaktschlaufen miteinander verbindet und damit einen Stromkreis schließt.

Dabei wird jedoch die Geschwindigkeit, mit der der Trägheitskörper den Schaltweg durchläuft, bei zunehmender Entfernung aus seiner Ruhestellung immer geringer, d.h. die Schaltzeit durch das Abnehmen der Geschwindigkeit der Trägheitsmasse relativ lange.

Bei einem aus der DE-PS 37 13 698 bekannten gattungsgemäßen Beschleunigungsschalter wird demgegenüber eine hohe Schaltsicherheit und eine sehr kurze Schaltzeit dadurch erreicht, daß an der Trägheitsmasse ein als Blattfeder wirkendes Stahlband angreift, das um seine Längsachse gewölbt ist. Wenn an die Federkennlinie einer solchen Rinnenfeder allerdings bestimmte Anforderungen gestellt werden sollen, so ist für die Rinnenfeder in der Regel eine Spezialanfertigung erforderlich. Außerdem bereitet die Herstellung einer verspannungsfreien Verbindung der Rinnenfeder mit der Trägheitsmasse bzw. dem Gehäuse des Beschleunigungsschalters erhebliche fertigungstechnische Schwierigkeiten, die bei dieser Konstruktion nur durch ein aufwendiges Vergießen der Feder mit dem Gehäusematerial einerseits und mit der Trägheitsmasse andererseits überwunden werden können. Dies schränkt allerdings die Materialauswahl für Gehäuse und Trägheitsmasse erheblich ein und erfordert ein sehr präzises Einrichten der relativen Lagen der Teile beim Vergießen. Bei der Vielzahl möglicher störender Einflüsse ist bei einem solchen Fertigungsverfahren mit einer hohen Ausschußrate und dementsprechend teuren Endprodukten zu rechnen. Ein weiterer Nachteil der bekannten Konstruktion ergibt sich aus der problematischen Verbindung zwischen der Rinnenfeder und dem Leiterkontakt, da hierbei zwei Materialien mit stark differierenden physikalischen Eigenschaften und in der Regel sehr unterschiedlichen Querschnitten elektrisch leitend und mechanisch stabil miteinander verbunden werden müssen.

Der Erfindung liegt daher die Aufgabe zugrunde, einen gattungsgemäßen Beschleunigungsschalter mit hoher Schaltsicherheit und sehr kurzer Schaltzeit zu entwickeln, bei dem die Feder ein billiges, leicht montierbares Standardteil ist, mit dem problemlos eine Verbindung zu den Leiterkontakten hergestellt werden kann.

Diese Aufgabe wird erfindungsgemäß dadurch gelöst, daß die Feder ein monostabiles Schnappelement ist. Derartige Schnappfedern wurden bislang nur für handbetätigte Tastschalter eingesetzt, bei deren Betätigung ein spürbarer Druckpunkt überwunden werden sollte. Da solche manuellen Tastschalter bei elektronischen Geräten ein riesiges Anwendungsfeld gefunden haben und in einer großen Vielfalt produziert werden, sind die entsprechenden zugehörigen Schnappfedern leicht erhältliche Standardteile, die dennoch Federcharakteristiken mit relativ geringen Toleranzen aufweisen, wobei die Auswahl an unterschiedlichen Charakteristiken ziemlich groß ist. Bei der erfindungsgemäßen Konstruktion wird die Verbindung des Schnappelementes mit der Trägheitsmasse einerseits und den Kontaktpaaren andererseits durch einfaches Einlegen des Schnappelementes zwischen Trägheitsmasse und Kontaktpaar hergestellt. Dadurch können von vornherein keine Verspannungen in der Verbindung auftreten. Da insbesondere kein Vergießen der Schnappfeder mit dem Gehäuse erforderlich ist, treten bei der Montage der Schnappfeder keine fertigungstechnischen Probleme der obengenannten Art auf. Auch bei der elektrischen Verbindung zwischen der Feder und den Leiterkontakten, wo in der Regel zwei stark differierende Materialien mit sehr unterschiedlichen Querschnitten zusammengebracht werden müssen, ergibt sich durch das simple Einlegen der Schnappfeder keine fertigungstechnische Schwierigkeit. Im Gegensatz zur Konstruktion nach der DE-PS 37 13 698 ist bei dem erfindungsgemäßen Beschleunigungsschalter außerdem lediglich eine einzige Feder erforderlich, die durch ihre monostabile Charakteristik selbst für ein Rücktreiben der Trägheitsmasse in ihre Ruhelage nach einem erfolgten Kontaktschluß sorgt, während bei dem bekannten Beschleunigungsschalter mindestens eine zweite Feder mit entsprechender fertigungstechnisch problematischer Aufhängung im Gehäuse des Beschleunigungsschalters und schwierig zu bewerkstelligender Verbindung zwischen dieser zusätzlichen rücktreibenden Feder und der Trägheitsmasse erforderlich ist.

Bei einer bevorzugten Ausführungsform ist an der dem monostabilen Schnappelement zugewandten Seite der Trägheitsmasse ein elastisches Pufferelement vorgesehen. Dadurch wird beim Aufprall der Trägheitsmasse auf das Schnappelement die Bewegung der Trägheitsmasse etwas verzögert, während die von dem Pufferelement getroffene Fläche des Schnappelementes in Richtung auf das Kontaktpaar vorauseilt und den elektrischen Kontakt schließt. Die verzögert nachfolgende Trägheitsmasse drückt dann die Fläche des Schappelementes, die bereits zurückschnappen will, weiter auf das Kontaktpaar und verlängert so die Kontaktzeit.

Bei einer Weiterbildung enthält das elastische Pufferelement ein elastomeres Material wie Gummi, Silikon, Weich-PVC oder dergleichen. Dadurch wird gleichzeitig eine Dämpfung der Bewegung der Trägheitsmasse und eine Entprellung der Kontaktgabe erreicht.

Bei einer anderen Weiterbildung enthält das elastische Pufferelement eine Verzögerungsfeder, insbesondere eine Metallfeder. Diese Verzögerungsfeder bewirkt ebenfalls eine Verzögerung der Bewegung der Trägheitsmasse, jedoch wird die Bewegungsenergie nicht durch dissipative Dämpfung abgeschwächt, sondern in der Verzögerungsfeder gespeichert und bei der Rückfederung wieder freigegeben.

Bei einer weiteren Ausführungsform ist an der dem monostabilen Schnappelement abgewandten Seite der Trägheitsmasse eine Vorspannfeder vorgesehen, die die Trähgeitsmasse bereits im unbeschleunigten Zustand mit einer vorgegebenen Vorspannkraft gegen das monostabile Schnappelement preßt. Nach Überdrücken des Widerstandes des Schnappelementes wirkt die Vorspannkraft zusätzlich zur Beschleunigungskraft der Trägheitsmasse gegen die zunächst relativ geringe Rückstellkraft des Schnappelementes und bewirkt einen stärkeren Andruck des Schnappelementes gegen das Kontaktpaar und damit eine erhöhte Kontaktsicherheit.

Bei einer anderen Ausführungsform sind von der Trägheitsmasse aus gesehen in unterschiedlichen Raumrichtungen monostabile Schnappelemente und zugehörige elektrische Kontaktpaare vorgesehen, wodurch der Beschleunigungsschalter auf Beschleunigungen in unterschiedliche Raumrichtungen ansprechen kann.

Bei einer einfachen Ausbildung dieser Ausführungsform sind jeweils ein monostabiles Schnappelement und ein zugehöriges elektrisches Kontaktpaar an zwei gegenüberliegenden Seiten der Trägheitsmasse auf einer ersten Achse durch die Trägheitsmasse angeordnet. Dadurch kann der Beschleunigungsschalter sowohl bei positiver Beschleunigung als auch bei Verzögerung in Achsrichtung ansprechen.

Bei einer bevorzugten Weiterbidlung ist die Trägheitsmasse so angeordnet, daß sie gleichzeitig beide monostabile Schnappelemente berührt und daß die Federkraft des einen Schnappelementes im Verhältnis zu der Federkraft des anderen so gewählt ist, daß die Trägheitsmasse in ihrer Ruhelage das eine Schnappelement überdrückt und das zugehörige elektrische Kontaktpaar geschlossen hält. Sobald die Trägheitsmasse in Richtung auf das andere Kontaktpaar beschleunigt wird und sich somit von dem einen überdrückten Schnappelement weg bewegt, wird das zugehörige eine Kontaktpaar geöffnet. Nach einer vorgegebenen Wegstrecke überdrückt die Trägheitsmasse sodann das andere Schnappelement und schließt das zugehörige andere Kontaktpaar. Die zwischen dem Öffnen des einen Kontaktpaares und dem Schließen des anderen Kontaktpaares verstrichene Zeit ist bei Annahme einer gleichförmigen Beschleunigung ein direktes Maß für die absolute Größe der Beschleunigungskomponente in Achsrichtung.

Bei einer anderen Weiterbildung sind auf mindestens einer weiteren, insbesondere zur ersten Achse senkrechten Achse durch die Trägheitsmasse jeweils ein monostabiles Schnappelement und ein zugehöriges elektrisches Kontaktpaar an zwei gegenüberliegenden Seiten der Trägheitsmasse angeordnet. Dadurch kann der Beschleunigungsschalter auch bei Einwirkung von Querbeschleunigungen ansprechen.

Insbesondere können die erste und zwei weitere Achsen wechselweise aufeinander senkrecht stehen und ein räumliches Achsenkreuz bilden, in dessen Ursprung die Trägheitsmasse angeordnet ist. Damit sind Messungen der Beschleunigungskomponenten in allen Raumrichtungen möglich, wie dies beispielsweise bei einem seismographischen Meßgerät erforderlich sein kann. Im symmetrischen Fall gleichberechtigter Raumrichtungen ist die Trägheitsmasse zweckmäßigerweise kugelförmig.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln und für sich oder zu mehreren in beliebiger Kombination Anwendung finden. Es zeigen:

Fig. 1a    einen schematischen Längsschnitt durch einen erfindungsgemäßen Beschleunigungsschalter;

Fig. 1b    eine schematische Draufsicht auf ein elektrisches Kontaktpaar mit angedeuteten Umrissen einer aufgelegten Schnappfeder;

Fig. 2    einen schematischen Längsschnitt durch eine Trägheitsmasse mit elastischem Pufferelement;

Fig. 3    einen schematischen Längsschnitt durch einen erfindungsgemäßen Beschleunigungsschalter mit einer Vorspannfeder;

Fig. 4    schematische Längsschnitte durch erfindungsgemäße Beschleunigungsschalter mit

    a) einem Schnappelement,

    b) zwei koaxial angeordneten Schnappelementen mit dazwischenliegender Trägheitsmasse,

    c) zwei koaxial angeordneten Schnappelementen mit dazwischenliegender Trägheitsmasse, von denen das linke Schnappelement im Ruhezustand der Trägheitsmasse überdrückt ist und

    d) würfelförmigem Gehäuse, auf den sechs Innenflächen des Würfels angeordneten Schnappelementen und dazwischenliegender, kugelförmiger Trägheitsmasse;

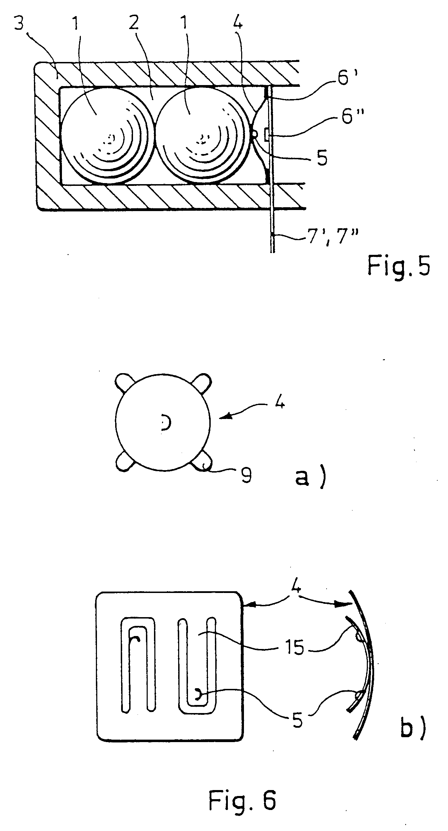

Fig. 5    einen schematischen Längsschnitt durch einen erfindungsgemäßen Beschleunigungsschalter mit zwei Kugeln als Trägheitsmasse;

Fig. 6a    eine schematische Draufsicht auf eine membranscheibenförmige Schnappfeder;

Fig. 6b    eine schematische Draufsicht und eine schematische Seitenansicht einer Schnappscheibe mit zwei Kontaktzungen und

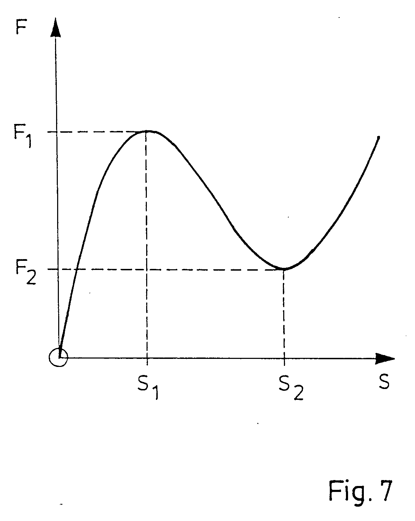

Fig. 7    eine typische Kraft-Auslenkungs-Kennlinie eines monostabilen Schnappelementes.

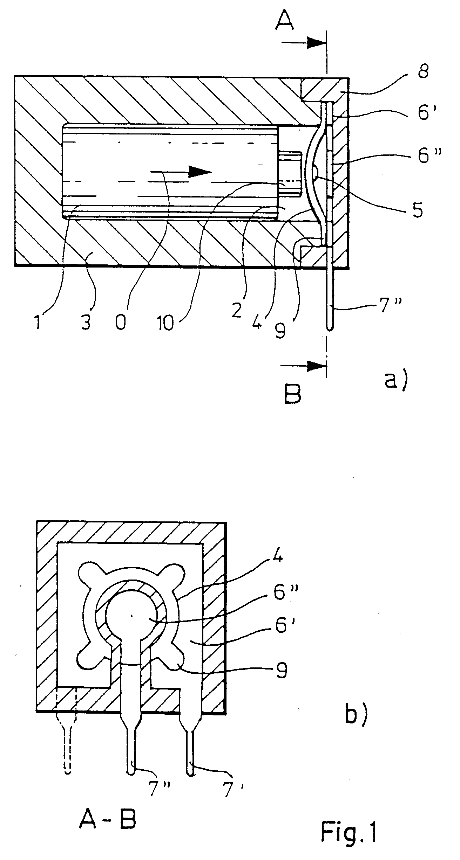

Bei dem in Fig. 1a gezeigten Beschleunigungsschalter bewegt sich bei einer Beschleunigung in Richtung des Pfeiles 0 eine Trägheitsmasse 1, die im gezeigten Ausführungsbeispiel im wesentlichen zylinderförmig ist, in einer den Außenkonturen der Trägheitsmasse 1 angepaßten Bohrung 2 eines Gehäuses 3 gegen die gewölbte Fläche eines Schnappelementes 4 mit eingeprägtem Kontaktknopf 5. Das Schnappelement 4 hat im gezeigten Ausführungsbeispiel die Form einer gewölbten Membranscheibe von im wesentlichen kreisrunder Außenkontur, wobei am Umfang im Abstand von etwa 90° vier Kontaktfüßchen 9 angeordnet sind, wie in Fig. 6a dargestellt. Mit diesen Kontaktfüßchen 9 wird das Schnappelement 4 vom Gehäuse 3 gegen den Kontakt 6' eines in einem Gehäusedeckel 8 angebrachten Kontaktpaares 6', 6'' gepreßt. Falls die Beschleunigungskraft in Richtung des Pfeiles 0 größer wird als die Federkraft des Schnappelementes 4, überdrückt die Trägheitsmasse 1 die gewölbte Fläche des Schnappelementes 4, so daß der Kontaktknopf 5 des Schnappelementes 4 auf den Kontakt 6'' gedrückt und damit das Kontaktpaar 6', 6'' elektrisch leitend geschlossen wird. Über nach außen geführte Kontaktanschlüsse 7', 7'' kann dann ein elektrischer Strom fließen.

In Fig. 1b ist eine Draufsicht auf das Kontaktpaar 6', 6'' gezeigt, wobei zur Verdeutlichung der relativen Position die Umrisse des Schnappelementes 4, insbesondere auch seiner Kontaktfüße 9 eingezeichnet sind.

Während das Gehäuse 3 und der Gehäusedeckel 8 bei der gezeigten Ausführungsform aus elektrisch nichtleitendem Material bestehen, sind die Kontaktpaare 6', 6'' bzw. 16', 16'' und die Kontaktanschlüsse 7', 7'' aus einem elektrisch leitenden Material, insbesondere einem Material mit hoher Leitfähigkeit. Auch das Schnappelement 4 bzw. 4' muß elektrisch leitfähig sein, jedoch kommt seinen elastischen Eigenschaften bei der Materialauswahl die größere Bedeutung zu. Das Schnappelement 4, 4' wird also in der Regel aus Stahlblech oder Messingblech sein, kann jedoch bei Bedarf auch aus anderem Metall, insbesondere auch aus Kupferblech, bestehen. Die elektrische Leitfähigkeit der Trägheitsmasse 1 spielt keine Rolle. Vielmehr kommt es nur auf die Größe ihrer Masse an, deren Trägheitskraft bei Überschreiten eines vorgegebenen Beschleunigungsschwellwertes größer als die der Trägheitskraft entgegenwirkende Federkraft F des Schnappelementes 4 sein muß.

In Fig. 7 ist eine typische Kraft-Auslenkungs-Charakteristik für ein Schnappelement 4 gezeigt. Nach Überschreiten eines ersten Schwellenwertes $F_1$ bei einer Auslenkung $s_1$ bricht der Widerstand des Schnappelementes 4 gegen das Andrücken der Trägheitsmasse 1 zunächst teilweise zusammen und erreicht bei einer Auslenkung $s_2$ einen Minimalwert der Rückstellkraft $F_2$. Bei weiterer Auslenkung s steigt dann die der Auslenkung entgegenwirkende Kraft F wieder steil an.

Sobald also die in Richtung auf das Schnappelement 4 wirkende Beschleunigungskraft der Trägheitsmasse 1 den Schwellwert $F_1$ überschreitet, schnappt die gewölbte Kontaktfläche des Schnappelementes 4 mit dem Kontaktknopf 5 auf den Kontakt 6'' und bewirkt ein Schließen des Kontaktpaares 6', 6''. Nach einer Zeitdifferenz in der Größenordnung von weniger als einer Millisekunde eilt die Trägheitsmasse 1 dem Schnappelement 4 nach und drückt den Kontaktknopf 5, der aufgrund der Rückstellkraft F der monostabilen Schnappelementes 4 bereits wieder in seine Ruhelage zurückschnappen will, weiter auf den Kontakt 6''. Die typische Prellzeit liegt im Bereich einiger Millisekunden, also deutlich über der Nacheilzeit der Trägheitsmasse 1, die ihrerseits deutlich über der Voreilzeit des Schnappelementes 4 liegt. Bei einer wichtigen Anwendung des erfindungsgemäßen Beschleunigungsschalters als Auslöseelement für die Zündung eines Airbags liegt die geforderte Kontakthaltezeit bei etwa 5 Millisekunden, während die Ansprechzeit des Airbags bei 12 bis 18 Millisekunden liegt.

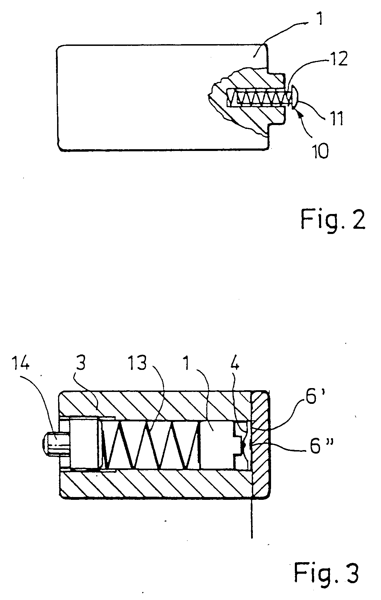

Um die Bewegung der Trägheitsmasse 1 beim Aufprall auf das Schnappelement 4 etwas zu verzögern, während die getroffene Fläche des Schnappelementes 4 in Richtung auf das Kontaktpaar 6', 6'' vorauseilt, kann, wie in Fig. 2 gezeigt, an der dem Schnappelement 4 zugewandten Seite der Trägheitsmasse 1 eine elastisches Pufferelement 10 vorgesehen sein, dessen Kopf 11 aus einem elastomeren Material wie beispielsweise Gummi, Silikon, Weich-PVC oder dergleichen bestehen kann. Durch die Dämpfung der Bewegung der Trägheitsmasse 1 wird die Differenz zwischen der Voreilzeit des Schnappelementes 4 und der Nacheilzeit der Trägheitsmasse 1 zusätzlich vergrößert und damit die Kontakthaltezeit verlängert. Außerdem wird gleichzeitig eine Entprellung der Kontaktgabe erreicht. Das elastische Pufferelement 10 kann auch eine Verzögerungsfeder 12 enthalten, die ebenfalls eine Verzögerung der Bewegung der Trägheitsmasse 1 gegen das Schnappelement 4 bewirkt, jedoch die Bewegungsenergie nicht durch Dämpfung abschwächt, sondern aufspeichert und bei der Rückfederung wieder freigibt. In jedem Falle liegt die Nacheilzeit der dem Schnappelement 4 zugewandten Seite des Pufferelementes 10 zwischen der Nacheilzeit der Trägheitsmasse und der Voreilzeit des Schnappelementes 4.

An der dem Schnappelement 4 abgewandten Seite der Trägheitsmasse 1 kann, wie in Fig. 3 gezeigt, eine Vorspannfeder 13 vorgesehen sein, deren Vorspannung mit Hilfe einer Schraube 14 eingestellt werden kann und die die Trägheitsmasse 1 bereits im unbeschleunigten Zustand mit einer vorgegebenen Vorspannkraft gegen Schnappelement 4 preßt. Diese Vorspannkraft wirkt nach Überdrücken des Schwellenwiderstandes des Schnappelementes 4 zusätzlich zur Trägheitskraft der Trägheitsmasse 1 und verstärkt damit den Andruck des Schnappelementes 4 gegen das Kontaktpaar 6', 6'', was eine erhöhte Kontaktsicherheit zur Folge hat. Die Vorspannkraft der Vorspannfeder 13 muß allerdings geringer gewählt sein, als die minimale Rückstellkraft $F_2$ des Schnappelementes 4, da sonst das letztere nach erfolgter Kontaktgabe nicht mehr in seine Ruhelage zurückschnappen könnte.

Um die Reibung der bewegten Trägheitsmasse 1 in der Bohrung 2 zu verringern, kann die Trägheitsmasse 1 die Form einer oder, wie in Fig. 5. dargestellt, mehrerer Kugeln haben. Beispielsweise können handelsübliche Kugellagerkugeln verwendet werden, die mit eng tolerierten Durchmessern und Massen leicht erhältlich sind.

Das Schnappelement 4 kann, wie in Fig. 6b dargestellt, auch mit einer oder mehreren Kontaktzungen 15 ausgestattet sein, so daß gleichzeitig mehrere Kontakte 6'' mit einem Kontakt 6' kurzgeschlossen werden können. Ein derartig aufgebautes Schnappelement 4 hat selbstreinigende Eigenschaften und weist längere Kontaktschließzeiten auf als das in Fig. 6a dargestellte Membranelement. Allerdings sind die Prelleigenschaften eines Zungenelementes ungünstiger als die eines Membranelementes.

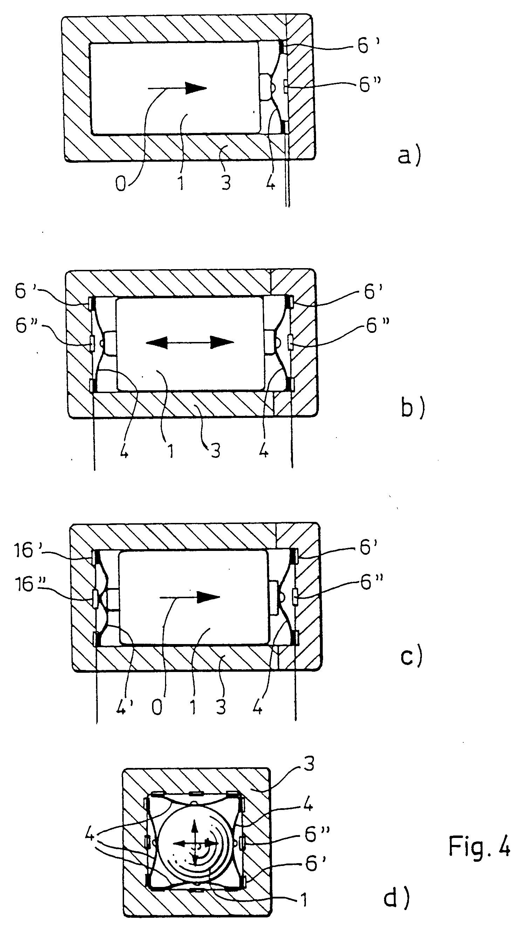

Statt eines einzigen monostabilen Schnappelementes 4 und eines zugehörigen elektrischen Kontaktpaares 6', 6'' können von der Trägheitsmasse 1 aus gesehen in unterschiedlichen Raumrichtungen auch mehrere Schnappelemente 4 und zugehörige Kontaktpaare 6', 6'' vorgesehen sein. In Fig. 4b sind zwei Schnappelemente 4 mit ihren zugehörigen Kontaktpaaren 6', 6'' koaxial auf zwei gegenüberliegenden Innenflächen des Gehäuses 3 mit der Trägheitsmasse 1 dazwischen angeordnet. Dadurch kann der Beschleunigungsschalter sowohl bei positiver Beschleunigung als auch bei Abbremsen in Achsrichtung ansprechen. Wenn der Beschleunigungsschalter z. B. als Auslöseelement für einen Airbag eingesetzt wird, kann daher der Airbag sowohl bei einem passiven als auch bei einem aktiven Auffahrunfall gezündet werden, sofern der Beschleunigungsschalter mit der Bewegungsachse der Trägheitsmasse 1 parallel zur Längsachse des Fahrzeugs eingebaut wird.

Bei Beschleunigung der Trägheitsmasse 1 in Richtung des Pfeiles 0 muß nicht unbedingt nur ein Kontaktpaar 6', 6'' durch Überdrücken eines Schnappelementes 4 geschlossen werden, sondern es kann, wie in Fig. 4c dargestellt, dabei auch ein Kontaktpaar 16', 16'' durch ein in der Ruhelage der Trägheitsmasse 1 überdrücktes Schnappelement 4' geöffnet werden, wenn das Schnappelement 4' aufschnappt, sobald sich die Trägheitsmasse 1 in Richtung des Pfeiles 0 von ihm wegbewegt. Nach einer vorgegebenen Wegstrecke überdrückt die Trägheitsmasse 1 sodann das andere Schnappelement 4 und schließt das zugehörige andere Kontaktpaar 6', 6''. Zwischen dem Öffnen des einen Kontaktpaares 16', 16'' und dem Schließen des anderen Kontaktpaares 6', 6'' verstreicht eine gewisse Zeit, die z. B. dadurch gemessen werden kann, daß mit dem Öffnen des einen Kontaktpaares 16', 16'' eine Zeituhr anläuft, die mit dem Schließen des anderen Kontaktpaares 6', 6'' wieder angehalten wird. Unter der Annahme, daß die auf die Trägheitsmasse 1 einwirkende Beschleunigung gleichförmig ist, gibt die gemessene Zeitdifferenz ein direktes Maß für die absolute Größe der Beschleunigung in Achsrichtung. Diese Information kann z. B. für die Betätigung weiterer passiver Schutzeinrichtungen zusätzlich zum Airbag verwendet werden.

Wie in Fig. 4d gezeigt, können beim erfindungsgemäßen Beschleunigungsschalter Schnappelemente 4 und ihre zugehörigen elektrischen Kontaktpaare 6', 6'' so angeordnet sein, daß der Beschleunigungsschalter auch bei Einwirkung von Querbeschleunigungen auslöst. Dies kann z. B. zur Beurteilung des augenblicklichen Zustandes ferngesteuerter Fahrzeuge, wie sie beispielsweise im Bergbau oder in großen Fabrikhallen eingesetzt werden, notwendig sein. Durch eine entsprechende Anordnung der Schnappelemente 4 und ihrer zugehörigen Kontaktpaare 6', 6'' auf den Achsen eines räumlichen Achsenkreuzes, in dessen Ursprung die Trägheitsmasse 1 angeordnet ist, können auch die Beschleunigungskomponenten in allen Raumrichtungen gemessen werden. Im symmetrischen Fall gleichberechtigter Raumrichtungen wählt man zweckmäßigerweise als Trägheitsmasse 1 eine Kugel. Anwendungen für einen solchen Beschleunigungsschalter, der auf Erschütterungen in jeder beliebigen Raumrichtung reagiert, finden sich beispielsweise bei seismographischen Meßgeräten für die Erdbebenmessung oder als Erschütterungssensoren für Raumfahrzeuge, mit denen die Aufprallrichtung eines externen Körpers beispielsweise bei einem Andockmanöver festgestellt werden soll. Selbstverständlich können auch bei einer solchen Anordnung Schnappelemente 4' Verwendung finden, die in der Ruhelage der Trägheitsmasse 1 überdrückt sind und ihr zugehöriges Kontaktpaar 16', 16'' geschlossen halten. Damit ist eine Messung des Beschleunigungsvektors nach Richtung, Orientierung und absoluter Größe möglich.

Bezugszeichenliste

Pfeil
0
Trägheitsmasse
1
Bohrung
2
Gehäuse
3
Schnappelement
4; 4'
Kontaktknopf
5
Kontaktpaar
6', 6''; 16', 16''
Kontaktanschlüsse
7', 7''
Gehäusedeckel
8
Kontaktfüßchen
9
elastisches Pufferelement
10
Kopf
11
Verzögerungsfeder
12
Vorspannfeder
13

Schraube
14
Kontaktzunge
15

**Patentansprüche**

1. Beschleunigungsschalter zum Schließen mindestens eines elektrischen Kontaktpaares (6', 6'') durch eine auf eine Feder einwirkende Trägheitsmasse (1), wobei die Feder und die Trägheitsmasse (1) so gewählt sind, daß der Beschleunigungsschalter erst anspricht, wenn eine auf die Trägheitsmasse (1) einwirkende Beschleunigungskraft einen vorgegebenen Wert überschreitet,

   dadurch gekennzeichnet, daß

   die Feder ein monostabiles Schnappelement (4) ist.

2. Beschleunigungsschalter nach Anspruch 1, dadurch gekennzeichnet, daß an der dem monostabilen Schnappelement (4) zugewandten Seite der Trägheitsmasse (1) ein elastisches Pufferelement (10) vorgesehen ist.

3. Beschleunigungsschalter nach Anspruch 2, dadurch gekennzeichnet, daß das elastische Pufferelement (10) ein elastomeres Material wie Gummi, Silikon, Weich-PVC oder dergleichen enthält.

4. Beschleunigungsschalter nach Anspruch 2 oder 3, dadurch gekennzeichnet, daß das elastische Pufferelement (10) eine Verzögerungsfeder (12), insbesondere eine Metallfeder enthält.

5. Beschleunigungsschalter nach einem der vorhergehenden Ansprüche, dadurch gekennzeichnet, daß an der dem monostabilen Schnappelement (4) abgewandten Seite der Trägheitsmasse (1) eine Vorspannfeder (13) vorgesehen ist, die die Trägheitsmasse (1) bereits im unbeschleunigten Zustand mit einer vorgegebenen Vorspannkraft gegen das monostabile Schnappelement (4) preßt.

6. Beschleunigungsschalter nach einem der vorhergehenden Ansprüche, dadurch gekennzeichnet, daß von der Trägheitsmasse (1) aus gesehen in unterschiedlichen Raumrichtungen monostabile Schnappelemente (4; 4') und zugehörige elektrische Kontaktpaare (6', 6''; 16', 16'') vorgesehen sind.

7. Beschleunigungsschalter nach Anspruch 6, dadurch gekennzeichnet, daß jeweils ein monostabiles Schnappelement (4; 4') und ein zugehöriges elektrisches Kontaktpaar (6', 6''; 16', 16'') an zwei gegenüberliegenden Seiten der Trägheitsmasse (1) auf einer ersten Achse durch die Trägheitsmasse (1) angeordnet sind.

8. Beschleunigungsschalter nach Anspruch 7, dadurch gekennzeichnet, daß die Trägheitsmasse (1) so angeordnet ist, daß sie gleichzeitig beide monostabile Schnappelemente (4; 4') berührt und daß die Federkraft des einen Schnappelementes (4') im Verhältnis zu der Federkraft des anderen (4) so gewählt ist, daß die Trägheitsmasse (1) in ihrer Ruhelage das eine Schnappelement (4') überdrückt und das zugehörige elektrische Kontaktpaar (16', 16'') geschlossen hält.

9. Beschleunigungsschalter nach Anspruch 7, dadurch gekennzeichnet, daß auf mindestens einer weiteren, insbesondere zur ersten Achse senkrechten Achse durch die Trägheitsmasse jeweils ein monostabiles Schnappelement (4; 4') und ein zugehöriges elektrisches Kontaktpaar (6', 6''; 16', 16'') an zwei gegenüberliegenden Seiten der Trägheitsmasse (1) angeordnet sind.

10. Beschleunigungsschalter nach Anspruch 9, dadurch gekennzeichnet, daß die erste und zwei weitere Achsen wechselweise aufeinander senkrecht stehen und ein räumliches Achsenkreuz bilden, in dessen Ursprung die Trägheitsmasse (1) angeordnet ist.

11. Beschleunigungsschalter nach Anspruch 10, dadurch gekennzeichnet, daß die Trägheitsmasse (1) kugelförmig ist.

Fig.1

8

Fig. 2

Fig. 3

a)

b)

c)

Fig. 4

d)

Fig.5

a)

b)

Fig. 6

Fig. 7